# EUROPEAN PATENT APPLICATION

(11) **EP 3 342 390 A1**
(43) Date of publication of application: **04.07.2018**
(21) Application number: 16207252.4
(22) Date of filing: 29.12.2016
(51) Int. Cl.: A61H 1/02, A61H 3/00

(54) **APPARATUS FOR SUPPORTING A LIMB OF A USER AGAINST GRAVITY**

(71) Applicant: ETH Zurich, 8092 Zurich (CH)
(72) Inventor: SCHMIDT, Kai, 8047 Zurich (CH); DUARTE, Jaime, 8038 Zurich (CH); RIENER, Robert, 8610 Uster (CH)

(57) **Abstract**

An apparatus for supporting a limb (10, 20) of a user against gravity comprises at least two garment elements (902, 903) and at least one passive force element (1002, 1002A) attached between two adjacent of said garment elements (902, 903). Preferably it further comprises at least one active support having a tendon (1100, 1100A) attached at one garment element (903, 902) and actuated by a tensile force actuator (1110, 1110A), wherein the tendon (1100, 1100A) is guided at least to one adjacent garment element (902, 903), wherein for every one tensile force actuator (1110, 1110A) a passive force element is present being an antagonistic passive force element to the associated tendon portion (1102, 1102A).

## Description

### TECHNICAL FIELD

The present invention relates to an apparatus for supporting a limb of a user against gravity, comprising at least two garment elements and at least one passive force element attached between two adjacent of said garment elements as well as such an apparatus having at least one active element.

### PRIOR ART

Weakness of the musculoskeletal system can cause movement problems that decrease the quality of life of a person. This weakness may be the result of genetic disorders, a neurological condition or injury, or simply healthy ageing. For people with such conditions, overcoming gravity- a force that constantly resists our movements in daily life - may be an uphill battle. This may mean they are unable to raise their arms to brush their hair, stand up and sit down smoothly, climb a flight of stairs to enter a bakery, or walk to the grocery store to buy food. Unfortunately, many of these conditions cannot be healed with the current state of medical care available; as a result, the best option for mobility - and for an improved quality of life - is the use of assistive technologies.

Mobility is of great importance for all humans and any problems with movement have implications far beyond the given impairment. In an elder population, for example, the inability to support their body's weight against gravity may lead them to feel insecure about moving in their community. This lack of mobility can lead to comorbidities such as joint pain or cardiovascular deficiencies, all derived from the overall reduction in movement. In another example, stroke survivors who have a hemiparetic arm may choose to stop using the arm since they are unable to use it for activities of daily life. This in turn leads to a phenomenon known as learned non-use - a condition whereby the lack of use of the arm leads to a vicious cycle and the patient may stop using the arm altogether. These behaviors of reducing or suppressing movement oppose the general approach of physical rehabilitation where movements must be performed in order to promote recovery.

One approach to provide this assistance is now making its way into the market in the form of powered exoskeletons. These devices, which have been developed primarily to assist with leg function, apply forces to the user to help with movements such as walking or standing. They use rigid structures-aligned with the user's body-and electric motors-placed at the structure's joints-to transmit the forces needed for assistance. However, due to their structure, rigid exoskeletons tend to be bulky, heavy, and expensive. This presents a problem when the goal is to bring a solution for assistance to the mass market.

Another approach to restore mobility comes from a series of projects initially developed for military applications. These projects, which originated from a request by the United States' Department of Defense agency DARPA (Defense Advanced Research Projects Agency), sought to develop technology that would reduce soldiers' musculoskeletal injuries that result from carrying heavy equipment. The resulting solutions provide carefully-timed, assistive forces at the legs while soldiers carry their equipment. These devices - known as exosuits - have overcome some of the bulkiness and weight issues of exoskeletons, but they have important problems when thinking of a patient population.

Since the target population of exosuits was able-bodied and well-trained soldiers, these devices have relied on position-based controllers to provide short bursts of assistance in specific phases of the walking cycle. They are not adapted to provide continuous assistance in order to truly assist the user with its daily lives.

The transmission of forces to the user when using exosuits relies on high shear forces to provide the assistance; these forces can lead to great discomfort and injuries of the skin and body, especially considering that many potential users (e.g. spinal cord injury patients) may also suffer from sensory issues that prevent them from feeling these forces.

Examples of such prior art devices are US 14/893.934 for an soft exosuit for assistance with human motion filed by Walsh, Conor, et al.. A further soft exosuit for assistance with human motion was filed by Asbeck, Alan Thomas, et al. as US 14/660.704. Another exosuit was disclosed in US 14/207.233 for Kornbluh, Roy David, et al.. The above mentioned Walsh, Conor, et al. have also filed a patent application for an orthopedic device including protruding members as US 15/025.472. Another prior art is a fitting element with controlled stiffness for Bureau, Maxime, Je Hyung Jung, and Thierry Keller in US 13/520.102.

Asbeck, Alan T., et al. have published an article "Biologically-inspired soft exosuit." in Rehabilitation robotics (ICORR), 2013 IEEE international conference on. IEEE, 2013. Wehner, Michael, et al. have published an article "A lightweight soft exosuit for gait assistance." in Robotics and Automation (ICRA), 2013 IEEE International Conference on. IEEE, 2013. Asbeck, Alan T. et al. have published an article "Stronger, Smarter, Softer: NextGeneration Wearable Robots," in IEEE Robotics & Automation Magazine, vol. 21, no. 4, pp. 22-33, Dec. 2014. Panizzolo, Fausto A et al. are the authors of "A biologically-inspired multi-joint soft exosuit that can reduce the energy cost of loaded walking" in Journal of NeuroEngineering and Rehabilitation, 13:43, 2016. Lobo-Prat, Joan, et al. have published an article about "Design and control of an experimental active elbow support for adult Duchenne Muscular Dystrophy patients." at the 5th IEEE RAS/EMBS International Conference on Biomedical Robotics and Biomechatronics. IEEE, 2014. The author Lobo-Prat, Joan, et al. has published "Adaptive gravity and joint stiffness compensation methods for force-controlled arm supports." in 2015 IEEE International Conference on Rehabilitation Robotics (ICORR). IEEE, 2015. Finally, Portema, Eric (2015) have published "Design of the Act In Arm : a novel planar active arm support for assisting people with Duchenne Muscular Dystrophy during table-top tasks" and In, Hyunki et al. "Exo-Glove: A Wearable Robot for the Hand with a Soft Tendon Routing System," in IEEE Robotics & Automation Magazine, vol. 22, no. 1, pp. 97-105, March 2015.

### SUMMARY OF THE INVENTION

The present invention is based on the insight that a device for a solution aimed at improving the quality of life of patients with muscle weakness can be based on passive elements and can further combine the strengths of exoskeletons and exosuits as additional layer of elements. A device according to the invention is usable for any limb, for both legs and arms, when performing activities of daily life using a wearable, lightweight, and low-cost solution.

An apparatus for supporting a limb of a user against gravity comprises at least two garment elements and at least one passive force element attached between two adjacent of said garment elements. Preferably the passive force elements are stretching bands or springs. The garment elements can comprise constringent elements maintaining the associated garment element in position wherein the constringent elements are essentially oriented perpendicular to the longitudinal axis of the associated limb portion. Such constringent elements can be cables provided and attached in the way of a corset, especially on an inner garment layer. The garment elements then can comprise stiffness inducing plates and/or glide plates provided between the user's skin and the constringent elements of the garment element to be oriented vertically to the longitudinal direction of the associated limb portion.

The apparatus can further comprise at least one active support having a tendon attached at one garment element and actuated by a tensile force actuator, wherein the tendon is guided at least to one adjacent garment element, wherein for every one tensile force actuator a passive force element is present being an antagonistic passive force element to the associated tendon portion.

Such an apparatus can have tendons being guided in low friction sheaths, wherein these sheaths are preferably at least partially attached to the corresponding garment portions. Each tendon is usually guided on one side of the body of the user in view of its sagittal plane for a first garment layer and is then separated in two portions where these two tendon portions are guided on opposite sides of the coronal plane of the associated limb to be reunited into one single tendon on the opposite side of said sagittal plane to be guided on the adjacent garment layer. This is due to the fact that while walking or changing the stance from sitting to standing the main axis of the hip raises the thigh whereas the shank is lowered in relation to the thigh, so that to help a person to raise to the vertical, the tendon has to be guided in front of the knee but behind the back of the hip, while the stretching bands over the knee are behind the knee and the stretching bands for the thigh is in front of the person. Since shear forces are to be avoided, it is important that the tendon is gliding in direction of the main direction of the longitudinal axis of the corresponding limb portion so that preferably the garment elements comprise glide plates provided between the user's skin and the tendons. In order to further reduce shear forces, the tendons or tendon portions can be guided in criss-cross patterns on said glide plates.

Preferably each tensile force actuator is either attached at one adjacent or opposite garment layer element or a guide direction change element is attached at said adjacent or opposite garment layer element guiding the associated tendon, wherein the tensile force actuator can then be fixed at any place at the apparatus.

The apparatus can comprise a control unit and at least a sensor attached to one of the garment elements, wherein the sensor is configured to detect the angle of the limb portion associated to said garment element in view of the vertical and/or the wherein the sensor is configured to detect a movement of the limb portion associated to said garment element, wherein the control unit is adapted to control the at least tensile force actuator to support the movement and/or the angle change of the limb portion. The control unit stores, for every joint, an authorized predetermined angle interval as well as stores for the group of all joints predetermined angle intervals, and is adapted to compare the sensor information for all joints with said stored intervals and blocks the tensile force actuator(s), if an angle value leaves one of the predetermined threshold intervals to avoid a fall of the user equipped with the apparatus.

It is an advantage that the system according to the invention uses a three-layer architecture to dynamically adapt its stiffness and levels of support according to the users' needs. Each layer comprises inventive features on its own and can be used in a stand alone solution or a solution of two of the three layers as will be described in the specification.

One advantage of a garment according to the present invention relies inter alia on the minimization of the shear forces, which can cause pain and discomfort, and maximization of the normal forces that provide the assistance against gravity. Furthermore, the design allows for the assistive forces to go beyond small bursts of forces - applied during specific phases of the gait cycle in exosuits - and instead be applied throughout the users' movements for both either legs or arms.

The three-layer comprises apparatus merges the advantages of both exosuit and exoskeleton technology to provide the continuous assistance of exoskeletons with the flexible interface of exosuits. Unlike exosuits, however, the apparatus according to the present invention minimizes the shear forces that can cause discomfort and maximizes the normal forces that provide assistance. By controlling the level of continuous assistance, the apparatus can assist its users when moving against gravity (e.g. getting up from a chair or raising their arm to brush their hair), and when moving with gravity (e.g. sitting on a chair or lowering an object from a shelf) without collapsing.

The multi-articulated layer architecture actively assists against gravitational forces and provides stability to its user with a minimal number of actuators.

The apparatus implements a three-layer architecture: a base layer, a ligament layer, and a power layer, to be used independently or in combination.

The base layer interfaces with the user's skin and provides a comfortable garment-like feel that is designed to provide the user with all-day comfort; this layer uses breathable materials that maximize temperature and humidity control.

The ligament layer resembles the ligaments in the body and provides varying levels of support and passive resistance depending on the user's needs for mobility.

Finally, the power layer borrows from the body's muscle-tendon design and uses a series of sinew-like tendons routed across the user's joints and actuated by force-controlled motors.

When combined in one system, the three layers work similar to an antagonistic pair of muscles to modulate the stiffness around the biological joints, and thus, provide structural stability in the absence of a rigid frame. By artificially increasing the stiffness around the human joints, the apparatus is able to mimic muscle co-contraction, which in turn, provides stability.

The base layer is the direct interface to the human body and builds the basis for the ligament and power layer. Since shear forces can easily cause pain and discomfort, this layer is designed to minimize and transform shear forces to normal forces. This is achieved by integrating functional textiles and semi-rigid anisotropic plates that transform the shear forces from the suit's power layer to normal forces acting on the user's body. The base layer incorporates multiple tendons, perpendicular to the power layer's tendons, to automatically tighten itself when high force levels are required during assistance. It also includes a series of inlets, based on layer jamming approach, to adaptively change the stiffness and account for any changes in muscle volume that occur during movement while avoiding extensive tissue compression. This unique approach increases the system's performance, the user's comfort, and overall safety.

In the upper body, the architecture of the base layer is also used for bracing weakened ligaments. For example, in the scapula, the base layer increases the stiffness of the shoulder joint to improve the transmission of forces from the muscles to the bones. The increased stiffness helps support the ligaments and allows the muscles to apply forces with less effort.

Unlike exosuits the apparatus according to the invention is able to provide high force levels that at least partially substitute the user's muscles. This is due to the specific structure of the base layer.

The ligament layer consists of elastic materials that are placed at the hip, knee, and ankle joints for the legs, and shoulder and elbow joints for the arms. This enables the apparatus according to the invention to store energy during movements that can be released to compensate for the weight of the legs and arms.

Finally, the power layer assists the main anti-gravity muscles and opposes the ligament layer.

Although the base layer as well as the combination of base layer and ligament layer can provide a solution for improving the mobility of the user, the best result can be achieved with while using all three layers.

This antagonistic structure provides stability and helps with stabilizing the body and balancing the trunk. Furthermore, the power layer can store a portion of its energy in the ligament layer. The active tendon encompasses a joint on one side and on the opposite side the passive elements. This enables the system to provide assistance in both "joint directions" with only one motor. It could also be the case that the system only uses active tendons or passive tendon or both in parallel. When used in parallel, the passive element saves some energy during movements which could be quickly released (being faster than the motor, compensating small unexpected deviations). In general, the suit and the human body can be seen as a spring-damper system that is influenced by the active and passive structure. Depending on the use case it can be set-up differently. The whole spring system can mechanically tuned.

The energy can then be released when the user requires support or weight compensation of the legs (e.g. during swing phase) or the arms (e.g. when extending the elbow). The tendons are routed through the base layer so that one end attaches to the power and then cascades into multiple tendons being routed across the joints and eventually attached to the base layer.

In terms of control software, the apparatus having a power layer according to the invention uses a force-based controller that coordinates the stiffness of the joints in order to achieve continuous support against gravity.

The controller uses an array of motion and forces sensors used that estimate the user's postures and movement intentions. Based on this information, the power layer controller of the apparatus decides how to optimally support the user's movements by modulating the forces and stiffness of the joints. The sensor setup includes IMUs (Inertial-Measurement Units) in front of the shins to measure lower-leg kinematics, on top of the upper arm to measure arm kinematics, and at the body's center of mass to measure trunk movements. Load cells are placed at each tendon to measure the forces of the power layer. Encoders in the motors of the power layer continuously measure the length of the tendons. The combination of the load cells and encoders allows fine control of the stiffness and the force levels in the system.

Besides keeping the user in a stable position, the force-controlled system can provide specific force refiles that target the user's needs during ADLs.

The apparatus according to the invention has been designed to accommodate each user's movement needs by defining various versions of the device. There are two basic distinctions of the versions: the user may choose between leg-only, arm-only, or leg and arm versions of the apparatus. Furthermore the user may choose between the non-actuated (base and ligament layers) and actuated (base, ligament, and power layers) versions of the suit / apparatus.

The base layer is essential because it forms the interface between the ligament and power layers, and the human body. The non-actuated and actuated layers can be used together or separately. The level of assistance of both versions of the suit can be adjusted by regulating the stiffness of the elastic elements in the ligament layer, as well as the distances of the tendons to the biological joints of the power layer.

From a rehabilitation point of view, it might be beneficial for some users to only use the non-actuated version of the suit. This is the lightest version of the apparatus according to the invention since the power layer alone accounts for approximately 35% of the weight within current embodiments. The leg-only version of the apparatus weighs only 6.5kg; this is half the weight of the lightest exoskeleton in the market in 2016. Optimal assistance with respect to balancing the trunk, upright stability, and movements against gravity can only be achieved with the powered version of the apparatus according to the invention.

The apparatus according to the invention is preferably always used with a sensor setup integrated in the layers. This sensor setup allows to control the active layer portions of the apparatus according to the invention and to monitor the user. The sensors can be easily setup with any computer, tablet or mobile phone. This could be also used for quick assessments of the user during training or while using the suit in the daily life. The number of sensors in the non-actuated version of the apparatus according to the invention can be reduced without significantly affecting the assistance provided by the suit.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematical view of the legs of a user with a three-layer apparatus according to an embodiment of the invention;
- Fig. 2: shows two schematical diagrams of the three-layer apparatus according to Fig. 1 in two different bending positions;
- Fig. 3: shows two further diagrams showing the forces applied by the power layer of an embodiment of Fig. 1;
- Fig. 4: shows a diagram of the support assistance control unit used within an apparatus according to an embodiment of the invention;
- Fig. 5A, 5B, 5C: show elements of the different layers of an apparatus of an embodiment of the invention;
- Fig. 6: shows a user in a bent over position with similar force and moment explanations than in Fig. 1;
- Fig. 7A & 7B: shows two schematical diagrams of a three-layer apparatus according to a further embodiment for the arm in a frontal plane view and in a sagittal plane view;
- Fig. 8: shows a schematical side view of the torso of a user with a three-layer apparatus according to a further embodiment of the invention for the support of an arm;
- Fig. 9: shows the general working principle acting on a single joint;
- Fig. 10: shows a general scenario for a joint with passive and garment layers as well as having active components;
- Fig. 11A: shows a schematical view of a leg in a partially bent position while using an apparatus according to an embodiment of the invention;
- Fig. 11B: shows a schematical view of the leg of Fig.11A in a more straight position;
- Fig, 11C: shows a schematical view of an arm in a partially bent position while using an apparatus according to an embodiment of the invention;
- Fig. 12: shows the principles of activation achieved through the garment layer; and
- Fig. 13: shows a schematical view of a stack of layers to be used to increase joint stiffness to counteract gravity.

### DESCRIPTION OF PREFERRED EMBODIMENTS

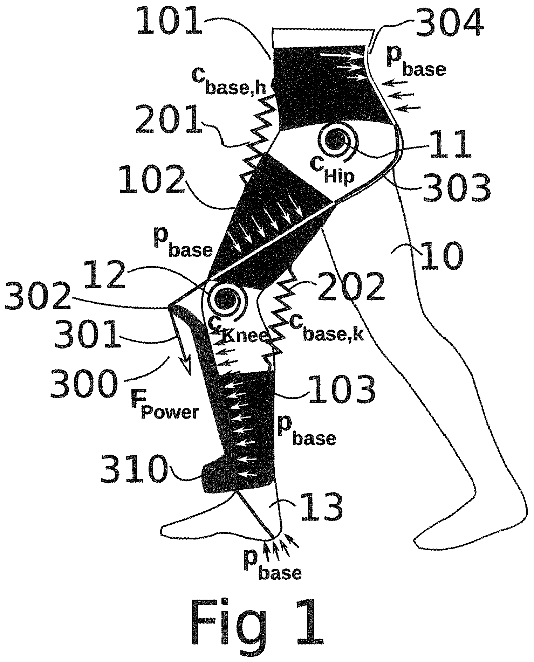

Fig. 1 shows a schematical view of the legs 10 of a user with a three-layer apparatus according to an embodiment of the invention, representing all occurring forces during operation of the lower limb schematically. The garment layer comprises a hip garment 101, a thigh garment 102 and a shank garment 103. The garments 101, 102 and 103, sometimes referred together as garment layer 100, are corset-like clothes providing the contact with the skin of the user on one side and attachment points for the passive layer and power layer on the other side.

The passive layer comprises dampening elements as hip-thigh passive layer 201 and thigh-shank passive layer 202. These passive layers 201 and 202, sometimes also referred to as passive layer 200, can be stretch bands attached at their free ends the garment layer elements 101, 102, 103. They can be attached under prestress in a way, that even for a sitting user, i.e. a user where hip to thigh and thigh to shank have an angle of about 90 degree one to another, they are under tension, in other words, the bands have the greatest length and thus restoring force for a standing user. There can be one stretchband as passive layers 201, 202 for each leg, the upper stretchband being attached to the common hip garment layer 101 on each front side.

The power layer comprises a power layer unit 310 having a control unit, a power unit, sensors and at least one actuator for each leg. The actuator is connected with a power layer transmission tendon 301, attached at one free end at the power layer unit 310, guided around a direction change point 302 in front of the knee 12, guided around the bottom part of the hip garment layer 303 and finally attached with the opposite free end of the tendon in the upper portion of the hip garment layer 101 at an hip attachment point 304.

The power layer applies a force that equals F_{Power}. This force increases the stiffness of the hip 11 and knee 12 joint and causes the normal pressure P_{base}. Combined with the passive elements 201 and 202 and their specific elastic stiffness, these forces are responsible for the joint stiffness modulation. The system can be easily set up to target specific deficiencies by adjusting C_{base} accordingly as well as the moment arm at the knee.

It is possible to use the apparatus according to Fig. 1 for the lower limb together with a further apparatus for the upper body as will be described in the present specification. Both parts can share the same power and control unit. A unique array of sensors as will be described is used to estimate all the joint angles. Such a system will have four power layer units 310 comprising motors to compensate for the influence of gravity in both arms and legs, one for each limb.

As mentioned above the three-layer architecture of the embodiment of Fig. 1 is composed of a base or garment layer, a ligament or passive layer, and a power layer. The configuration reliably provides stability and assistance with a minimum number of actuators and without a rigid frame. Both the ligament and the power layers are attached to the base layer which forms the interface to the human body. The power layer features distal tendon actuators in front of the shin as well as the main power supply and control unit preferably provided in front of the user's trunk (not shown in Fig. 1).

The tendons 301 of the power layer start at the tendon actuator, in front of the shin, and cascade multiple times within the base layer to provide optimal support. The power layer actively assists with hip and knee extension. The power layer includes rigid mechanical and electric components - such as motors, pulleys, PCBs and batteries - that are placed at body locations where they do not hinder any movements required during daily living. This arrangement allows the user to sit comfortably in a wheelchair. The tendon actuators provide forces up to 700N using a pulley system without a gearbox. The ligament layer features passive elements that can store part of the energy provided by the user or by the power layer. This is achieved by the antagonistic arrangement of the power and ligament layer. The thigh-shank stretchband 202 is provided behind the knee, whereas the tendon 301 is guided over a direction change point 301 in front of the knee. The hip-thigh stretchband 201 is arranged in front of the pelvis of the user, whereas the corresponding portion of the tendon 301 passes in a tendon hip guidance 303 behind the user. This design follows the insight of providing co-contracting muscles that increase the joint stiffness to provide stability. The passive elements, i.e. 201 and 202 of the ligament layer are placed on the base layer, i.e. 101, 102, 103 to support hip and knee flexion as well as ankle dorsi-flexion. The stiffness of the ligaments can be directly be adjusted to fit the user's needs through either initial length change of the stretchbands or by exchanging the stretchbands. The design of the ligament layer, in combination with the force modulation of the power layer, enables the system to provide individualized assistance while changing the joint stiffness actively. All forces generated by the power and ligament layer are transformed to normal forces by the base garment layer before reaching the user's body. The base layer itself incorporates elements that modulate the layer's stiffness to minimize shear forces and maximize the normal forces that provide the assistance. To ensure that the lower limb apparatus applies physiological relevant forces, an array of sensors for motion and intention detection is embedded in the apparatus. IMUs are provided in front of the shins to measure lower-leg kinematics, and an accelerometer is provided at the hip garment layer 101 to measure the upper body's movements.

The power layer unit 310 attached to the shank garment comprises a tendon actuator producing forces by reeling in artificial tendons that cascade within the base layer. The system uses a brushless motor in combination with a pulley system extending in front of the shin that is structurally configured to minimize bending forces. To achieve this, the tendon actuator mainly consists of lightweight polymers and composites. The pulley system enables the motor to generate high forces in the absence of gears. This enables the system to operate almost silently while minimizing friction and the overall inertia in the system. The dynamic actuators provide forces up to 700N. A load cell is integrated close to the motor, allowing in combination with all embedded sensors for a reliable force control and stiffness modulation. A fan might be placed right above the motor and its controller to prevent overheating of the system. The system temperature is monitored continuously. Similar actuators can be used for an upper body apparatus but are then preferably a scaled down version of those used for the lower body since the required forces are smaller.

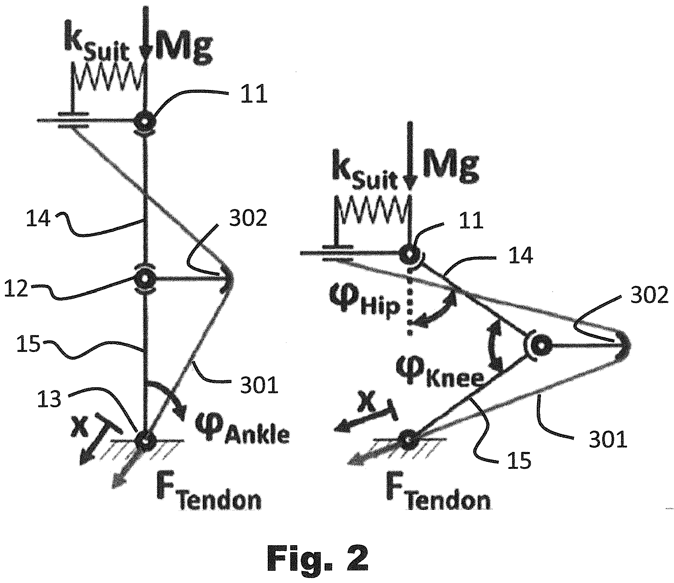

Fig. 2 shows two schematical diagrams of the three-layer apparatus according according to Fig. 1 in two different bending positions. Similar reference numerals show similar features throughout all drawings. The forces provided by the lower limb apparatus can affect parts of motor system beyond those involved in mobility. To maintain movement patterns that are physiologically correct, a link segment model is applied to the apparatus of Fig. 1 and is represented here as Fig. 2 from which can be seen that there is a relation between the external moment arms-to generate joint moments-and the antagonistic springs that oppose the tendon of the power layer. In addition, and to ensure reliable transmission of forces to the user, the analysis included an experimentally validated model of the combined stiffness of the user's soft tissue and the textile-based structure of the apparatus.

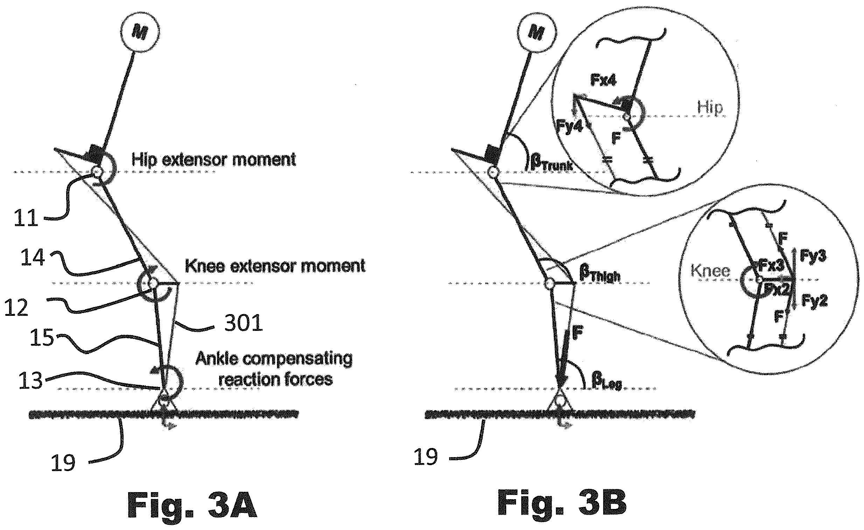

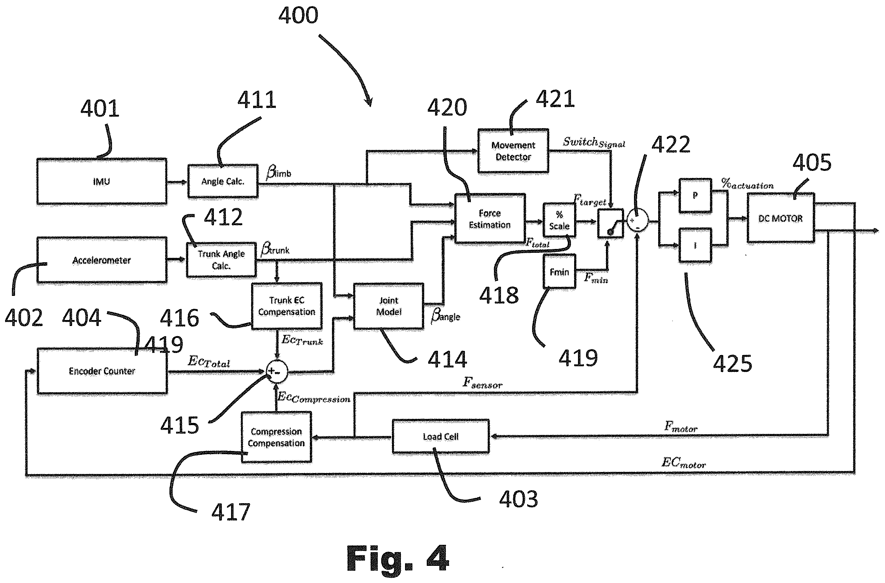

Fig. 3 shows two further diagrams showing the forces applied by the power layer of an embodiment of Fig. 1. The user is standing on ground 19 with slightly flexed leg. The support control unit (not shown) continuously estimates the user's posture and calculates the influence of gravity on the user's biological joints. Fy4 and Fx4 are applied to the hip restoring a greater angle β_{Trunk}. At the knee Fy3 opposes Fy2 in the vertical direction in view of the flat ground 19 whereas Fx2 and Fx3 are applied horizontally, redressing the angle β_{Thigh} as well as the angle β_{Leg}. To compensate for the force of gravity, the apparatus modulates the tendon forces and stiffness accordingly. The optimal force profile and system stiffness depends on each user. Parameters like the moment arms and the elastic spring constants, as well as the user's height and weight, need to be programmed into the system. By doing so, the system can address specific movement deficiencies. Because the apparatus always compensates for gravity, independent from the specific movement, the support assistance control unit 400 as shown in Fig. 4 operates independent of any user input. Additionally, the system can be used to generate forces additional to the gravity controller e.g. to damp spasticity. Sudden movements like a collapse can be detected reliably and prevented. The system aims to keep the user in a statically stable position even while supporting dynamic movements such as walking or reaching for an object. The lower limb apparatus supports the extensor muscles Gluteus Maximus, Gluteus Medius; Rectus Femoris, Vastii muscles, Gastrocnemius and Soleus. To provide structural stability in the absence of a rigid frame the system mimics muscle co-contraction to increase the joint stiffness. This is achieved using the architecture where the passive layer opposes the motor layer. An increase in joint stiffness will prevent or reduce joint movement which in turn prevents joint collapse. The power layer can indirectly control the movements provided by the artificial ligaments. This is done by actively providing forces to damp joint movement.

Fig. 4 shows a diagram of the support assistance control unit 400 used within an apparatus according to an embodiment of the invention.

The support assistance control unit 400 consists of four control sub-systems: joint angle estimation, stiffness modulation, gravity compensation and active force modulation. Most sensors are provided within the base layer. This relates to the IMU 401 (at the shank) and the accelerometer 402 (centrally at the upper front end of the hip garment 101). However, there are also sensors specifically used by the power layer. The load cells 403 and the tendon length estimation 404 are part of this layer. The tendon length estimator 404 is also referred to encode counter, since it obtains its signals from the DC motor 405 and its position. The force controlled system modulates the stiffness of the user's biological joints and applies additional forces to the three-layer architecture of the apparatus.

The signals issued by the IMU 401 near the feet of the use are used for angle calculation of the lower limb in the angle calculation unit 411. The accelerometer 402 provides a signal used for angle calculation of the trunk in the angle calculation unit 412. The two angle calculation units 411 and 412 provide angle input signals for a force estimation unit 420 receiving further input relating to the β_{angle}, obtained from the joint model unit 414, working on the limb angle β_{limb} and a position information obtained from the adding unit 415 starting with the value of the cable / tendon length, estimated in unit 404 and modulated by a trunk EC compensation unit 416 as well as a correction value obtained from the compression and compensation unit 417 connected to the load cell 403. The angles as mentioned measure the position of the trunk as well as the angle of the most distal segment (shin, forearm in the case of an upper limb device) - there are filters and drift compensating calculations on top of that. Joint model unit 414 is responsible for getting the last remaining angle (beta angle) being the inter-segment angle (knee, elbow).

The force estimation unit 420 provides a control signal for the DC motor 405 to shorten or lengthen or maintaining the length and position of the tendon 301. This is modulated by the scaling support value 418, whereas a minimum force 419 is provided to counter the prestressed stretchband effect. The IMU 401 also contributes via the limb angle calculation to the movement detector 421 which switches the signal between said Fₘᵢₙ and F_{target}. The IMU 401 measures the angle of the most distal limb segment and can be seen as a filtered input. This value is an important input for the link segment model according to an embodiment of the invention for the compression compensated angle estimation. Fₘᵢₙ is the minimal force in the system to keep the tendons tensioned or in combination with the ligament layer it will set the correct stiffness around the joint. This control signal to drive the DC motor 405 is then modulated with a force signal from the value of the load cell 403. The motor applies forces equivalent to the influence of gravity (based on the underlying angle estimation + link segment model) or as far as Fₘᵢₙ is concerned, it directly modulates joint stiffness in combination with the ligament layer. This signal combination happens in adding unit 422 wherein the output signal is used in a PI control scheme 425 to control motor 405.

It is noted that the above mentioned calculations apply to both the upper body and the lower body suit.

The base layer acts as the interface to the user. This layer is partially made of stretchable and breathable materials. Additionally, it includes multiple elements that can change the apparatus stiffness as well as semi-rigid plates that are arranged to reduce shear forces and transform them into normal forces. The base layer also features tightening and self-tightening mechanisms using tendons that are arranged perpendicular to the tendons of the power layer. The power layer is attached to base layer. It consists of multiple tendons that are routed from the actuators in front of the shin over the knee and to hip joint. The power layer features pre-tension system to adjust the passive system stability. The ligament layer is also attached to the base layer and opposes the power layer's tendons.

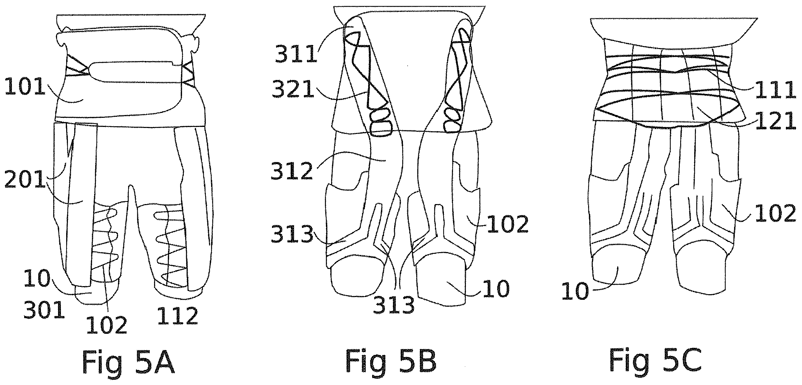

Fig. 5A, 5B and 5C show elements of the different layers of an apparatus of an embodiment of the invention. Fig. 5A shows a front view of parts of the leg 10 and hip of a user having the garment layer 100 combined with elements of the passive layer 300.

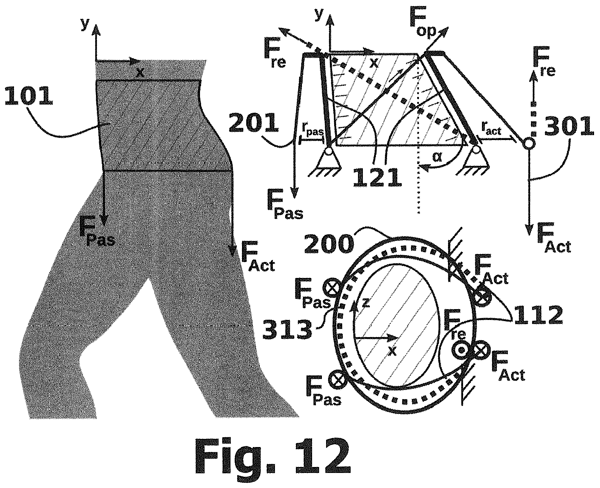

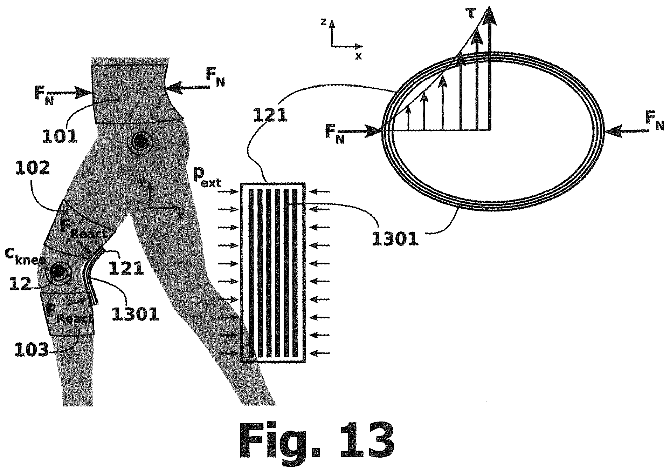

The hip garment layer 101 comprises a flap covering the base mesh and which flap is attached via cables on the other side. A better view, how these elements are attached to function as a self-tensioning hip belt can be seen in connected with Fig. 12 and 13. Fig. 5C also shows the hip garment layer 101 but in a back view. The base textile is stretchable and resistant to wear, since a plurality of tensioning cables 111 are tightened over the surface of the base layer garment to distribute any pression coming from the cables 112 onto the entire surface, since the cables 112 are attached at the garment layer and are just shown covered by the 201. This self-tensioning system is oriented perpendicular to the motor layer's tendons 321 and thus avoids shear forces impending on the users legs. Semi-rigid plates 121 within or on the garment layer are transforming shear forces to normal forces.

Fig 5B shows a back view the element provided on top of the base garment. This comprises on the back two paths 311, each for one leg 10. Each path 311 is attached at the upper end of the hip garment and comprises the hip power layer transmission tendon 321, provided in a criss-cross-cord arrangement, held by loops or tabs provided at the sides of the path 311. In other words, the transmission tendon 321 is guided along the path 311 from thigh to waist from one side of the path 311 to the other side 311 of the path by friction-low loops or tabs on the opposite edges of the path 311. There are more loops or tabs near the thigh and the upper end of the path and there are less (here essentially one long crossing pair of tendons over the middle 50% of the path 31. This pre-tension mechanism increases stability. These tendons continue in two parallel tendons in area 312 as covered path, before splitting up into two cables guided in silicone tubings 313 to be guided on both sides of the lower thigh towards the knee, where the cable are attached together into one single tendon 301, being redirected through direction change point 302, usually being a glide surface in a predetermined distance in front of the knee 12 and is then guided to the motor unit of the power layer in unit 310 in front of shank.

Said tension mechanism 311, having a plurality of tensioning cables, is oriented perpendicular to the base layer. It has an associated tension mechanism 312 within the thigh garment layer 102 and as well, but not shown in Fig. 5A to 5C, in the shank garment layer 103. They contribute to the stiffness of the garment. Fig. 5A also shows the two stretchbands for each leg 10 as well as hip-thigh passive layer 201.

Layer jamming inlets are provided to adapt the stiffness of the suit. The interaction forces between the apparatus and its user were evaluated with regard to their influence on the musculoskeletal system. The results built the basis to develop a system to detect slippage and improper fit during operation.

Moreover, these results have been used to improve the system's efficiency by improving the transmission of forces from the apparatus to the user. This was done using a layer jamming approach to adaptively set the stiffness of the suit. This technology increases the efficiency of the apparatus and it also improves the level of comfort by reducing the forces acting on the user's body which is explained in connection with Fig. 13.

To ensure that the apparatus minimizes shear forces and primarily transmits normal forces to the human body, pressure sensors and 3-axis force sensors were used to measure the impact of the features of the apparatus according to an embodiment of the invention. Tekscan pressure sensors were used to create a pressure map at several locations on the trunk. Furthermore, optical force sensors (Optoforce OMD-20-SE-40N) were integrated to detect any shear forces applied to the user's skin. It was shown that the system architecture minimizes shear forces and transforms these to normal forces.

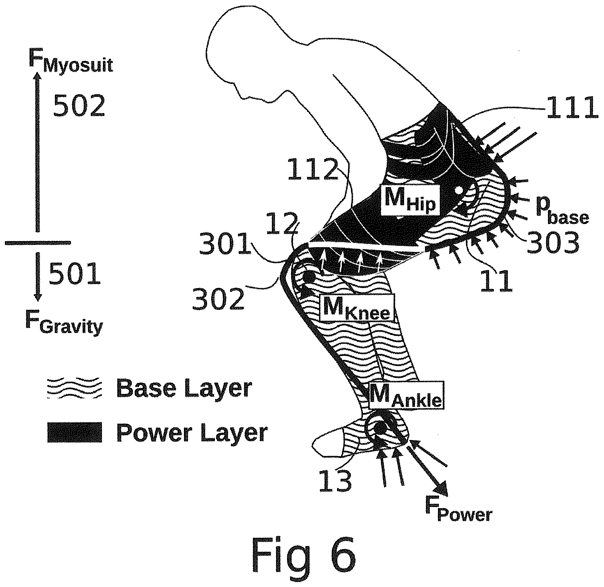

Fig. 6 shows a user in a bent over position with similar force and moment explanations than in Fig. 1. This schematic of the lower limb apparatus shows how the base and power layer interact with each other. The power layer's tendons 301 modulate the stiffness of the biological joints 11, 12 and 13. These forces with a component in the vertical direction as apparatus force F_{Myosuit} 502 compensate the influence of the gravity force 501 on a joint level. To avoid the shear forces acting on the user, the base layer transforms these forces to normal forces. Semi-rigid, anisotropically arranged plates are integrated in the base layer as shown in Fig. 12. Semi-rigid refers to both the stiffness changing inlets as well plates that are embedded in the suit. Semi-rigid is related to stiff and solid, but yet flexible in certain directions. The anisotropic behavior refers to different stiffnesses in longitudinal and crosswise direction which is mainly needed to optimally adapt to the body shape. The principle is explained in connected with the description of Fig. 12 and Fig. 13. These plates 121 are arranged in a specific way, so that the base layer still has a garment-like feel. This arrangement is able to create a moment around the connection of the power and base layer.

The user will experience this moment as normal forces that help to return to an upright body position. This schematic shows an application scenario of the lower limb apparatus. The system is designed to allow sitting in a wheelchair comfortably. The wheelchair can be used to travel long distances and the apparatus according to the invention is only deployed when the user needs to negotiate obstacles or wants to be in an upright position. The wheelchair provides a high capacity battery which is able to charge to the battery of the apparatus inductively. The inductive charger is built in the backrest of the wheelchair. Once the user is sitting, the batteries of the apparatus are charging based on the wheelchair batteries. This allows the system to be used with small capacity batteries. Therefore, the system can be very lightweight since the batteries are one of the main drivers in terms of weight.

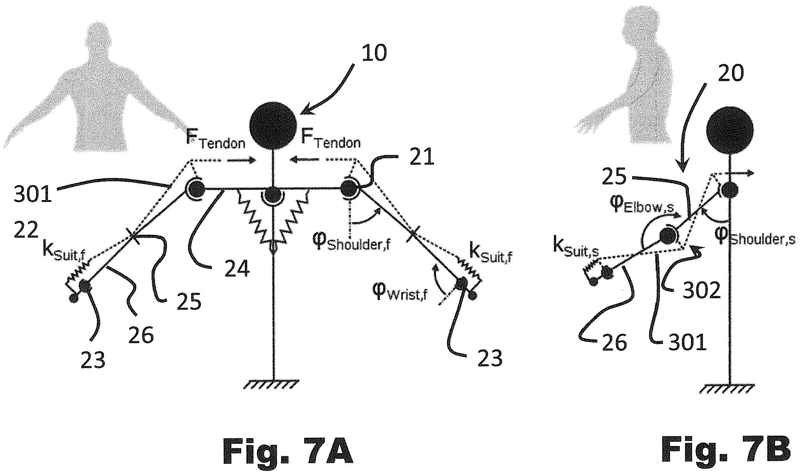

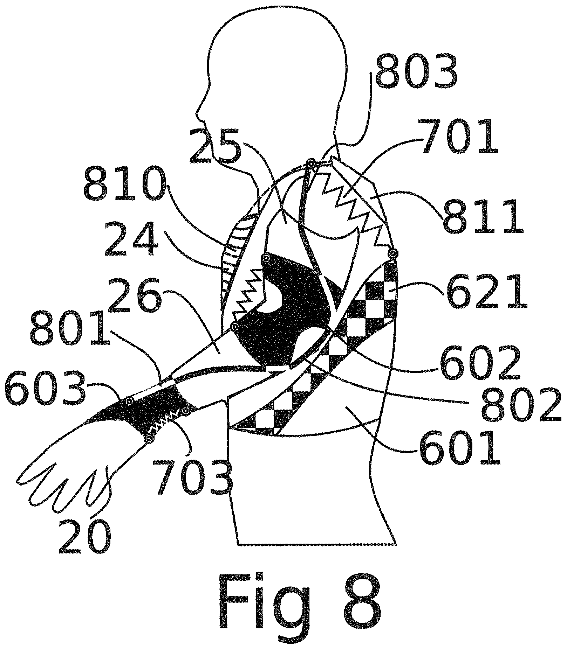

Fig. 7A and Fig. 7B shows two schematical diagrams of a three-layer apparatus according to a further embodiment for the arm 20 in a frontal plane view and in a sagittal plane view; Fig. 8 shows a schematical side view of the torso 24 of a user 10 with a three-layer apparatus according to the further embodiment of the invention for the support of an arm.

Fig. 7A and Fig. 7B show the principle used in the lower limb apparatus as shown in Fig. 1 transferred to the upper body. The upper body apparatus does provide support in both the sagittal and frontal plane. The elbow joint 22 and shoulder joint 21 are gravity compensated by the same antagonistic architecture as in the lower limb apparatus. Wrist 23 flexion and extension is also supported antagonistically. The power layer actively supports joint extension and the ligament layer assists joint flexion. Assistance to the shoulder joint 21 is focused on compensating the weight of the arm 20. The base layer builds the interface for the ligament and power layer and includes stiffness changing inlets 621 that are placed near the shoulder joint to support the ligaments. The inlet 621 starts at the shoulder 21 and runs at the side of the user to the lower edge of the torso harness 601. This allows the muscles to apply forces with less effort while additionally being supported by the power and ligament layer. Unlike the lower limb apparatus the tendon actuators 810 of the power layer are placed close to trunk, i.e. torso 24, to avoid distal masses. In another embodiment, not shown in the drawings, the lower limb actuators are placed above the hip joint. The design also features a clutch mechanism 811 that adjusts the cascading tendons across the shoulder 21 to move the arm 20 in both the frontal and sagittal plane as seen in Fig. 7A and Fig. 7B. The clutch selects between the front and sagittal plan according to the user's intent of movement which is detected automatically, mechanically or through detection via sensors and the control unit deciding to switch the element. The clutch will work through sensor input (IMU + cable length), the switching will then depend on the user's intention based on an initial direction. The clutch engages one option or the other.

The torso harness 601 comprises a spring or stretchband 701 attached at the shoulder 21 near the redirection point (not visible) of the shoulder cable guide 803 towards the cable actuator 810 and furthermore attached at the backside of the torso 24. The shoulder cable guide 803 comprises the cable (not visible) and guides it from the front side towards the elbow pad 602 on the underside in a predetermined distance in the elbow cable guide 802. Then the cable continues inside the foream cable guide 801 towards the dorsum of the hand and is attached at the wrist pad 603 on the back of the hand. Wrist pad 603 comprises at the underside a wrist spring 703 acting antagonistically to the cable guide 801.

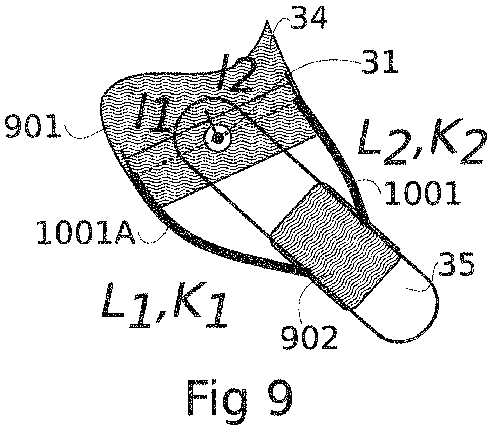

Fig. 9 shows the general working principle acting on a single joint, here called upper joint 31, independent of the application for a lower or upper limb. In this setup two layers - garment and passive are present. The garment layer is shown as 901 for the body garment and 902 of the upper limb part garment encompassing the upper limb portion 35 and it is connected, in this general setup, by two elements 1001 and 1001A of the passive layer. Two elements here in this embodiment, as opposed to one, to highlight that the only requirement is for at least one passive element 1001 to join the garment layer parts 901 and 902. They ultimately define the torque profile across the joint 31; that is, the length and stiffness of each passive member (Lᵢ and Kᵢ), and the size of the moment arm across the joint (lᵢ), wherein i =1 and 2.

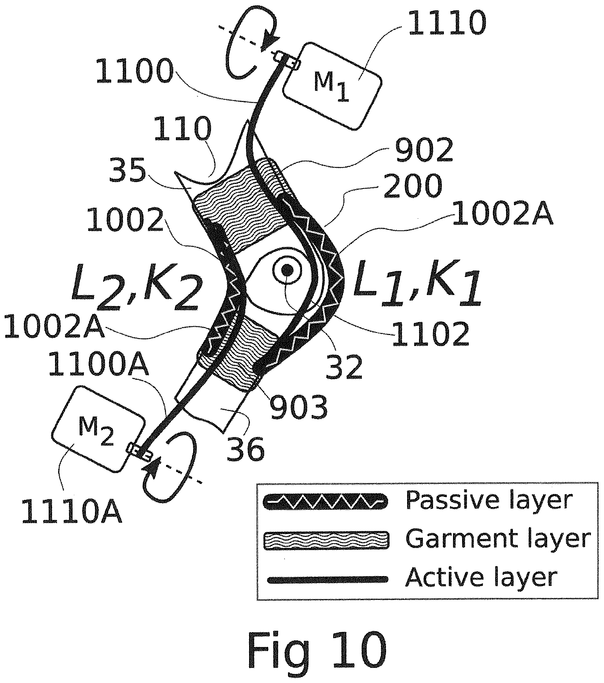

Fig. 10 shows a general scenario for a joint, here lower limb portion 32, where again the passive 200 and garment 100 layers working across a joint 32 are shown and here also the active components (motors or actuators 1110 and 1110A) are included, which can further regulate the stiffness of this joint 32. The motors 1110 and 1110A are placed in arbitrary locations to highlight the fact that they do not have to be placed at a specific location, but what is important is how the tendon 1100 and 1100A are routed across the joint 32 and where it connects to the garment layer 100. The first tendon 1100 actuated from above is attached at the lowest possible garment 903, which can be in the case of a upper limb a wrist pad and in case of a lower limb beyond the ankle at a heel pad. The second tendon 1100A is actuated from below and is attached at the uppermost garment 902. Nevertheless, the associated motor 1110 or 1110A can be positioned elsewhere, as long the tendons are "attached" at the garment in the sense that the tendons are e.g. contained in a sheath fixedly attached to the garment element. Associated to each tendon 1100 and 1100A is an antagonistic passive element, i.e. 1002 and 1002A, respectively.

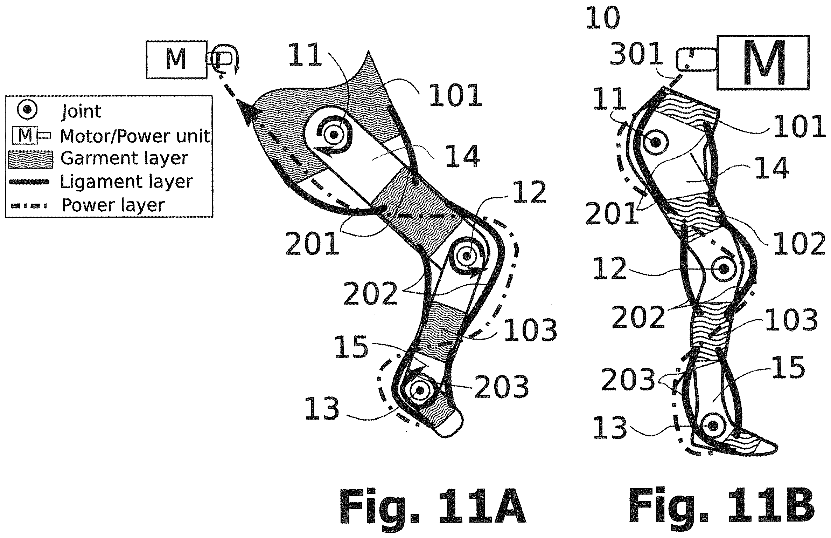

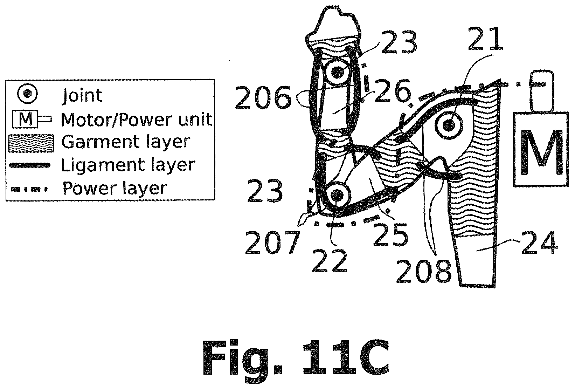

Fig. 11A shows a schematical view of a leg in a partially bent position while using an apparatus according to an embodiment of the invention, while Fig. 11B shows a schematically way of the leg of Fig. 11A in a more straight position. Fig. 11C shows a schematical view of an arm in a partially bent position while using an apparatus according to an embodiment of the invention.

Fig. 12 shows the principles of activation achieved through the garment layer. The apparatus according to an embodiment of the invention features self-tightening mechanisms integrated in the textiles. When the apparatus is actuated and applies forces actively (F_{Act}), then the system automatically tightens and increases normal forces. This refers to the criss-cross structure that automatically tightens when forces are applied. F_{Act} is coupled to the structure, so that the forces are also used increase "tightness" of the corset. The active tendons are directly connected to this corset-like structure which is wrapped around the body and limbs. This enables the system to apply continuous levels of tightness proportional to the applied forces to compensate gravity. This mechanism increase user comfort by reducing the forces applied to the user over time. The integral design of the base layer ensures that no slippage of the apparatus appears during low force scenarios.

The apparatus base layer compromises different structures that aim to minimize shear forces. Thin polymer sheets are stacked upon each other and create the effect of layer jamming. When compressed they increase the stiffness by forming a rigid bond. The sheets have low adhesion (flexibility when not compressed) and high friction coefficients (rigidity when compressed).The required compression forces can be achieved through the apparatus structure itself (corset), pneumatically or through electro-adhesion. This allows the base layer to take the body shape during actuation and increases the contact area between the base layer and the human body. Increasing and optimizing the contact area results in low normal and shear stress (sigma/tau=F/A, referred to to alpha in the present drawing). The increased stiffness reduces the compression forces through a circular structure that distributes the forces within its structure when rigid. A high system stiffness also increases the apparatus efficiency since it decreases tissue deformation and minimizes cable travel.

The antagonistic structure of the apparatus itself (Base + Ligament + Power Layer) decreases shear forces by re-routing forces along the body to counteract forces being applied on the opposite site of the body. The virtually fixed bearings shown in Fig. 12 are present because of the tight fit between the apparatus and the human body. During such force scenarios the stacked sheets in the base layer will become rigid. Alternately these parts could be replaced by other high stiffness polymers or composites - Although this will reduce user comfort and the tight fit, and thus, decrease the system efficiency. The rigid spacer between the rigid plates and the textile layer on top creates a moment arm r_{act}. This results in a moment around the virtually fixed bearing which in return introduces a force Fₒₚ. The generated force partially counteracts the shear forces on the opposite site (F_{Pas}). This principle works in a cross-arrangement on both sides. Fig. 13 only shows a 2D representation of the principle. In an application multiple tendons should be used to reroute forces and the application of force should be distributed over an optimal area on top of rigid plates. Contact areas between the structures in the base layer are designed to have low friction to minimize friction loses and allow optimal force transmission. To decrease the shear stress even further, a block and tackle system is used to reroute Fᵣₑ= F_{Act}/2. This force is partially used for the self-tightening mechanism, but also for counteracting the shear forces at the opposite leg. The tendons are routed through a fixed sleeve (rigidly attached). This has the advantage that there is no force transmission outside of the sleeve and the forces can be directly transmitted where they are needed. The tendon is arranged that it partially counteracts the pulling force F_{Act}. All occurring forces that are not counteracting F_{Act} are led into the rigid plates to not increase the pressure and stress on the human body.

Fig. 13 shows a schematical view of a stack of garment layers to be used to increase joint stiffness to counteract gravity. The stack of sheets is exposed to an external pressure (pₑₓₜ) which will increase the stiffness of the stack. Due to gravity F_{React} applies another force to the layer stack which in turn counteract the external force, and thus, modulate the stiffness around the joint. The layers are also used to absorb external forces in a circular structure.

**LIST OF REFERENCE SIGNS**

| | | | |
|---|---|---|---|
| 10 | leg | | layer |
| 11 | hip | 206 | forearm-hand passive layer |
| 12 | knee | 300 | power layer |
| 13 | ankle | 301 | power layer transmission tendon |
| 14 | thigh | | |
| 15 | shank | 302 | direction change point |
| 19 | ground | 303 | cable hip guidance |
| 20 | arm | 304 | hip attachment point |
| 21 | shoulder | 310 | power layer unit |
| 22 | elbow | 311 | power layer path |
| 23 | wrist | 312 | covered path |
| 24 | torso | 313 | silicone tubing |
| 25 | upper arm | 321 | hip power layer transmission tendon |
| 26 | forearm | | |
| 31 | upper joint | 400 | support assistance control unit |
| 32 | lower joint | | |
| 34 | upper body | 401 | IMU |
| 35 | upper limb portion | 402 | accelerometer |
| 36 | lower limb portion | 403 | load cell |
| 100 | garment layer | 404 | tendon length estimator / encoder counter |
| 101 | hip garment layer | | |
| 102 | thigh garment layer | 405 | motor |
| 103 | shank garment layer | 411 | angle calculation unit |
| 111 | tensioning cable | 412 | angle calculation unit |
| 112 | tensioning cable | 414 | joint model unit |
| 121 | semi-rigid plate | 415 | adding unit |
| 200 | passive layer | 416 | trunk EC compensation unit |
| 201 | hip-thigh passive layer | 417 | compression and compensation unit |
| 202 | thigh-shank passive layer | | |
| 203 | shank-foot passive layer | 418 | scaling support value unit |
| 204 | shoulder-upper arm passive layer | 419 | minimum force unit |
| | | 420 | force estimation unit |
| 205 | upper arm-forearm passive | 421 | movement detector |
| 422 | adding unit | 902 | upper limb part garment |
| 425 | PI control unit | 903 | lower limb part garment |
| 501 | gravity force | 1001 | first passive element |
| 502 | apparatus force | 1001A | second passive element |
| 601 | torso harness | 1002 | first passive layer |
| 602 | elbow pad | 1002A | second passive layer |
| 603 | wrist | 1100 | first tendon |
| 621 | stiffness adaptation inlet | 1100A | second tendon |
| 701 | shoulder stretchband | 1102 | first tendon direction change |
| 703 | wrist spring | 1102 | second tendon direction change |
| 801 | forearm cable guide | | |
| 802 | elbow cable guide | 1110 | first actuator |
| 803 | shoulder cable guide | 1110A | second actuator |
| 810 | cable actuators | 1301 | stacked polymer layers |
| 811 | clutch mechanism | | |
| 901 | body garment | | |

## Claims

1. Apparatus for supporting a limb (10, 20) of a user against gravity, comprising at least two garment elements (101, 102, 103; 901, 902, 903) and at least one passive force element (201, 202; 1001, 1001A, 1002, 1002A) attached between two adjacent of said garment elements (101, 102, 103; 901, 902, 903).

2. Apparatus according to claim 1, wherein the passive force elements are stretching bands or springs.

3. Apparatus according to claim 1 or 2, wherein the garment elements comprise constringent elements (111, 112) maintaining the associated garment element in position wherein the constringent elements (111, 112) are essentially oriented perpendicular to the longitudinal axis of the associated limb portion.

4. Apparatus according to claim 3, wherein the constringent elements (111, 112) are stretching bands embedded in the garment layer and being fixedly connected to the attached ends of the passive force elements.

5. Apparatus according to claim 3 or 4, wherein the garment elements comprise stiffness inducing plates (121) and/or glide plates provided between the user's skin and the constringent elements (111, 112) of the garment element.

6. Apparatus according to any one of claim 1 to 5, further comprising at least one active support (300) having a tendon (301; 1100, 1100A) attached at one garment element (101; 903, 902) and actuated by a tensile force actuator (310; 1110, 1110A), wherein the tendon (301; 1100, 1100A) is guided at least to one adjacent garment element (302, 303; 902, 903), wherein for every one tensile force actuator (310; 1110, 1110A) a passive force element is present being an antagonistic passive force element to the associated tendon portion (302, 303; 1102, 1102A).

7. Apparatus according to claim 6, wherein the tendons are guided in low friction sheaths, at least partially attached to the corresponding garment portions.

8. Apparatus according to claim 6 or 7, wherein each tendon guided on one side of the body of the user in view of its sagittal plane for a first garment layer comprises a separated portion where two tendon portions are guided on opposite sides of the coronal plane of the associated limb to be reunited on the opposite side of said sagittal plane to be guided on the adjacent garment layer.

9. Apparatus according to any one of claims 6 to 8, wherein the garment elements comprise glide plates provided between the user's skin and the tendons.

10. Apparatus according to claim 9, wherein the tendons or tendon portions are guided in criss-cross patterns on said glide plates.

11. Apparatus according to any one of claims 6 to 10, wherein each tensile force actuator (310; 1110, 1110A) is either attached at one adjacent or opposite garment layer element or a guide direction change element is attached at said adjacent or opposite garment layer element guiding the associated tendon, wherein the tensile force actuator can then be fixed at any place at the apparatus.

12. Apparatus according to any one of claims 6 to 11, comprising a control unit (400) and at least a sensor (401, 402) attached to one of the garment elements, wherein the sensor (401) is configured to detect the angle (411) of the limb portion associated to said garment element in view of the vertical and/or the wherein the sensor (402) is configured to detect a movement of the limb portion associated to said garment element, wherein the control unit (400) is adapted to control (405) the at least tensile force actuator (310; 1110, 1110A) to support the movement and/or the angle change of the limb portion.

13. Apparatus according to claim 12, wherein the control unit (400) stores, for every joint, an authorized predetermined angle interval as well as stores for the group of all joints predetermined angle intervals, and is adapted to compare the sensor (401) information (411) for all joints with said stored intervals and blocks the tensile force actuator(s) (310; 1110, 1110A), if an angle value leaves one of the predetermined threshold intervals to avoid a fall of the user equipped with the apparatus.
